# EUROPÄISCHE PATENTANMELDUNG

(11) **EP 2 515 554 A2**
(43) Veröffentlichungstag der Anmeldung: **24.10.2012**
(21) Anmeldenummer: 12162821.8
(22) Anmeldetag: 02.04.2012
(51) Int. Cl.: H04Q 9/00

(54) **Verfahren zur Visualisierung von Zustandsdaten einer Maschine in einer Anlage sowie Vorrichtung hierfür**

(30) Priorität: 18.04.2011 DE 102011007561
(71) Anmelder: Schaeffler Technologies AG & Co. KG, 91074 Herzogenaurach (DE)
(72) Erfinder: Gitzen, Matthias, 52072 Aachen (DE)

(57) **Zusammenfassung**

Die Erfindung betrifft ein Verfahren zur Visualisierung von Zustandsdaten einer Maschine in einer Anlage auf einem mobilen Endgerät. Im erfindungsgemäßen Verfahren wird eine aktuelle Position eines Beobachters, der das mobile Endgerät mitführt, innerhalb der Anlage mit Bordmitteln des mobilen Endgerätes ermittelt. Anschließend erfolgt eine Verknüpfung der aktuellen Position mit einer bestimmten Maschine der Anlage, die die geringste Entfernung zur aktuellen Position hat. In einer zentralen Datenbank werden die Zustandsdaten und absoluten Positionen aller Maschinen der Anlage gespeichert. Zwecks Visualisierung werden Zustandsdaten der bestimmten Maschine von der zentralen Datenbank abgerufen und angezeigt.

Die Erfindung betrifft auch eine Vorrichtung zur Ausführung dieses Verfahrens.

## Beschreibung

Die Erfindung betrifft ein Verfahren zur Visualisierung von Zustandsdaten einer Maschine in einer Anlage. Außerdem betrifft die Erfindung eine Vorrichtung zur Durchführung eines solchen Verfahrens.

Die Zustandsüberwachung an Maschinen in Anlagen ist in nahezu allen Industriebereichen bekannt. Da es in der Instandhaltung häufig das Problem gibt, dass man den aktuellen Zustand einer Maschine nicht mit dem bloßen Auge erkennen kann, werden in der Regel Geräte oder Sensoren zur Zustandüberwachung an den Maschinen montiert. Beispielsweise werden mittels Schwingungsdiagnose bewegte Maschinenteile, wie Lager, Generatoren oder Getriebe auf Verschleiß oder beginnende Schäden überwacht.

Mittels spezieller Sensoren kann die Schmiermittelqualität von bestimmten Lagerungen analysiert werden. Ebenso kann eine Temperaturüberwachung oder Thermographie, Spannungsmessung oder sonstige Überwachung bestimmter Anlagenteile oder Maschinen erfolgen, um den Betriebszustand der Maschinen einer Anlage zu überwachen.

Mit der Zustandsüberwachung sowie der rechtzeitigen Einleitung von Wartungs- und Reparaturarbeiten können ungeplante Stillstände an Maschinen und Anlagen und deren hohe Folgekosten vermieden werden.

Es gibt Anlagen, in denen die Zustandsdaten regelmäßig mit Handgeräten erfasst werden, um sie dann einer zentralen Stelle zu übergeben, wo die Auswertung erfolgt. Ebenso möglich ist eine stationäre Installation der Messgeräte. Dann werden die Daten der einzelnen Sensoren meist zentral erfasst und ausgewertet.

Eine zu überwachende Anlage kann beispielsweise in ihrer Gesamtheit an einem Bildschirm eines lokalen Computers visualisiert werden, wobei anhand der Auswertungen des Systems mögliche Gefahrenstellen oder erforderliche Wartungsmaßnahmen an den entsprechenden Maschinen dargestellt werden. Bei solchen Systemen werden beispielsweise auf einem Grundriss der Maschinenhalle oder Anlage alle zugehörigen Maschinen mit einem Überwachungshinweis abgebildet.

Besonders bei großen Anlagen in Maschinenhallen oder bei sich über mehrere Gebäude erstreckenden oder im Außenbereich verteilten Anlagenteilen, wie beispielsweise in Windkraftwerken kann vor Ort an der einzelnen Maschine nicht deren Status im Wirkungsbereich der gesamten Anlage abgefragt und dem Bediener dargestellt werden. Ein Monitoring solcher Anlagen ist regelmäßig nur an lokalen PC's oder beispielsweise über das Internet möglich. Zwar können Warnmeldungen oder Alarmfunktionen beispielsweise per E-Mail oder SMS vom System an festgelegte Empfänger versendet werden, wobei auch mobile Empfänger möglich sind, deren aktueller Standtort relativ zu den überwachten Anlagenteilen dann aber nicht bekannt ist.

Aus dem Bereich des Mobile Computing ist es bekannt, Smartphones, Tablet-PC's oder PDA's zur Abfrage und Verarbeitung vielfältiger Informationen und Daten und auch zur computergestützten Erweiterung der Realitätswahrnehmung (augmented reality) zu verwenden. Dabei werden auf der Grundlage einer automatischen Positions- und Objekterkennung Live-Bilder oder Videos mit computergenerierten Zusatzinformationen oder virtuellen Objekten in verschiedenen Ebenen von Informationsschichten überlagert und dargestellt.

Seit einigen Jahren gibt es Ansätze zur Positionsbestimmung und Navigation innerhalb von Gebäuden. Dies ist im Vergleich zur GPS-Nutzung vergleichsweise aufwändig, da ohne Sichtkontakt zum Himmel die GPS-Signale nicht empfangbar sind.

Mit einer flächendeckenden WLAN-Ausstattung und einem Smartphone gibt es Bestrebungen und prototypische Softwarelösungen zur Bestimmung der Position innerhalb von Gebäuden und Navigation zu gewünschten Punkten im Raum.

Aus der Diplomarbeit von Michael Dippoldt "Persönliche Positionsbestimmung mit Beschleunigungssensoren", Universität Bremen wird ein prototypisches System zur Indoor-Navigation vorgestellt. Dabei wird die Koppelnavigation verwendet. Diese Arbeit wird ausdrücklich in den Offenbarungsgehalt dieser Anmeldung mit einbezogen, insbesondere in Bezug auf die technische Realisierung solcher Beschleunigungssensoren und die Möglichkeiten zur Verarbeitung der von diesen gelieferten Daten.

Der Erfindung liegt die Aufgabe zugrunde, einen Status der Zustandsüberwachung einer bestimmten Maschine einer Anlage für einen Beobachter, der sich insbesondere in örtlicher Nähe zur überwachten Anlage befindet, auf einfache und komfortable Weise an mobilen Geräten abzubilden.

Die Lösung der Aufgabenstellung gelingt durch ein Verfahren mit den Merkmalen des Anspruchs 1. Der nebengeordnete Anspruch 10 gibt eine Vorrichtung zur Durchführung dieses Verfahrens an.

Ein erfindungsgemäßes Verfahren stellt Zustandsdaten einer bestimmten Maschine, die Teil einer vorzugsweise großflächigen Anlage ist, auf einem mobilen Endgerät, wie beispielsweise einem Smartphone, PDA oder Tablet-PC dar, und zwar in Abhängigkeit von der aktuellen Position des Beobachters nur die Maschine, die dieser Position zugeordnet ist.

Das erfindungsgemäße Verfahren umfasst folgende Schritte:
- Ermitteln einer aktuellen Position eines Beobachters innerhalb der Anlage;
- Verknüpfen der aktuellen Position mit mindestens einer bestimmten Maschine der Anlage, die die geringste Entfernung zur aktuellen Position hat;
- Abrufen von Zustandsdaten der bestimmten Maschine von einer zentralen Datenbank, in der die Zustandsdaten aller überwachten Maschinen der Anlage erfasst werden;
- Visualisierung der Zustandsdaten der bestimmten Maschine auf einer Anzeige des mobilen Endgerätes.

Die Vorteile der Erfindung sind insbesondere darin zu sehen, dass beispielsweise für einen Wartungsmechaniker vor Ort in der Anlage nur die für ihn relevanten Daten der Maschine angezeigt werden, an der er sich gerade befindet. Der Wartungsmechaniker/Beobachter erhält somit immer genau die Zustandsdaten, die er benötigt, ohne dass er sich in komplexen Anlagendarstellungen die eigene Position selbst suchen muss. Damit genügen auch relativ kleine Anzeigeeinheiten für die Darstellung der jeweils relevanten Zustandsdaten.

Das erfindungsgemäße Verfahren wird auf der Seite des Beobachters mit dem mobilen Endgerät durchgeführt. Es lässt sich herstellerseitig in Spezialgeräte fest implementieren oder beispielsweise als sogenannte App auf einem vorhandenen mobilen Endgerät installieren.

Zur Positionsbestimmung wird in einer besonders bevorzugten Ausführungsform ein in das mobile Endgerät integrierter Beschleunigungssensor verwendet, nachdem ein Startpunkt festgelegt wurde. Die Festlegung des Startpunktes kann dabei auf unterschiedliche Weisen erfolgen. Der Beobachter kann sich mit seinem mobilen Endgerät beispielsweise an einer festen Station innerhalb der Anlage anmelden, deren (absolute) Position bekannt ist. Diese feste Station kann durch eine Infrastruktur innerhalb der Anlage vorgegeben sein und zum Beispiel eine Docking-Station (Infrarot), ein Netzwerkpunkt (WLAN-Hotspot) oder andere aus dem Stand der Technik bekannte Registrierungseinrichtung für ein mobiles Endgerät sein. Es ist aber ebenso möglich, dass der Startpunkt per GPS an einem Ort außerhalb der Anlage oder des Gebäudes mit GPS-Empfang ermittelt wird. Dazu muss in das mobile Endgerät ein GPS-Empfänger integriert sein.

Ausgehend vom Startpunkt wird vom Beschleunigungssensor bei der Bewegung des mobilen Endgerätes mit dem Benutzer/Beobachter jeweils die Verschiebung der vorherigen Position zur neuen Position bestimmt. Dazu eignet sich beispielsweise das Verfahren der Koppelnavigation als relative Positionsbestimmung, welches dem Fachmann bekannt ist. Bei den meisten dieser bekannten Verfahren wird die Weglänge durch eine Schrittzählung und Ermittlung der Schrittlänge im Zusammenhang mit der Bewegungsrichtung errechnet. Zum Zweck der Ermittlung der Bewegungsrichtung kann auch ein Magnetsensor oder elektronischer Kompass im mobilen Endgerät verwendet werden.

Zur relativen Positionsbestimmung kann alternativ ein Trägheitsnavigationssystem (auch Inertiales Navigationssystem; englisch: Inertial Navigation System, INS) verwendet, da heutzutage die dafür erforderlichen Sensoren meist ohnehin in mobile Endgeräte (integrierte Navigation) integriert sind. Ausgangspunkt ist das Erfassen der Beschleunigung und der Drehrate mittels Inertialsensoren. Ist die Beschleunigung eines Massepunkts im Raum bekannt, erhält man durch Integration über die Zeit seine Geschwindigkeit und nach nochmaliger Integration seine durch die Geschwindigkeit verursachte Positionsänderung. Die Winkelgeschwindigkeit wiederum wird mit einem Drehratensensor gemessen. Der Verkippungswinkel im inertialen Raum ergibt sich aus der Integration der gemessenen Winkelgeschwindigkeiten über die Zeit in den drei Raumrichtungen. Insgesamt erfordert ein INS die Messung von 6 Größen: die Beschleunigung und die Winkelgeschwindigkeit, jeweils in drei Raumrichtungen.

In einer zentralen Datenbank des Zustandsüberwachungssystems sind neben den Zustandsdaten der einzelnen Maschinen auch deren Position in der Anlage als relative oder absolute Position gespeichert.

Hat der Beobachter einen Zielpunkt erreicht und will er die Maschine, an oder in deren Nähe er sich aktuell befindet überprüfen, wird seine aktuelle Position mit Hilfe eines bekannten Verfahrens ermittelt. Dies kann in einer bevorzugten Ausführungsform nach dem in der Diplomarbeit von Michael Dippoldt "Persönliche Positionsbestimmung mit Beschleunigungssensoren", Universität Bremen beschriebenen oder einem anderen bekannten Verfahren erfolgen.

In einer bevorzugten Ausführungsform der Erfindung wird eine Bezugskoordinate folgendermaßen ermittelt: Es erfolgt eine laufende Ermittlung eines Vektors aus den Beschleunigungs- und Lagedaten der Beschleunigungs- oder Intertialsensoren. Aus den laufend ermittelten Vektoren wird ein Bewegungsvektor ermittelt. Die Berechnung der Positionsdaten erfolgt aus dem Bewegungsvektor und der Bezugskoordinate.

Es ist ebenso möglich, weiterhin Daten infrastrukturabhängiger externer Sensoren oder Sendeeinheiten, wie beispielsweise WLAN-Hotspots oder IR-Sensoren zu erfassen und bei der Ermittlung der Bezugskoordinate und/oder der Positionsermittlung zu verwenden.

Zu der aktuell ermittelten Position, also dem Zielpunkt werden aus der zentralen Datenbank vorzugsweise per Funkverbindung mit der zentralen Datenbank die Daten der Maschine ermittelt, die sich in einem bestimmten vorgegebenen Umkreis vom Zielpunkt befindet. Dies kann eine einzige Maschine oder ein Gruppe aus wenigen Maschinen sein.

Je nach Wahl kann der Beobachter sich die Zustandsdaten einer oder mehrerer Maschine im Umkreis des Zielpunktes grafisch auf dem Monitor des mobilen Endgerätes darstellen lassen. Dazu kommen die gewöhnlichen Darstellungsmöglichkeiten der Zustandsüberwachung in Frage und es wird lediglich der betreffende Ausschnitt der ohnehin vorhandenen Gesamtvisualisierung dargestellt. Dafür ist der kleinere Monitor des mobilen Endgerätes ausreichend. Ebenso ist es möglich, dass auf Anfrage des mobilen Endgerätes durch einen Webserver aus den Daten der am Zielpunkt befindlichen Maschine beispielsweise eine dynamisch generierte Webseite erzeugt wird, welche auf dem mobilen Endgerät dargestellt wird. Ein Webserver wird meist ohnehin von der Zustandsüberwachungs-Software zur Verfügung gestellt.

Selbstverständlich sind in der Zustandsüberwachungssoftware in bekannter Weise verschiedenste Warn-, Alarm- und Fehlermeldungsvorgänge implementiert. Die Meldungen werden vorzugsweise an das mobile Endgerät abgesetzt, dabei kommen die bekannten Kommunikationskanäle in Frage.

Weiterhin ist es möglich, durch gezielte Interaktionen mit der zentralen Datenbank Daten und ggf. Befehle auszutauschen, um beispielsweise eine Fernwartung an der visualisierten Maschine mithilfe des mobilen Endgeräts durchzuführen (z.B. Softwareupdate, Sensorinitialisierung, Maschinenstopp oder dergleichen). Möglichkeiten hierfür sind dem Fachmann bekannt.

Ebenso kann beispielsweise ein zeitlicher Verlauf aller oder bestimmter Zustandsdaten der betreffenden Maschine dargestellt werden, um die Dringlichkeit erforderlicher Wartungsarbeiten abzuschätzen oder weitere Auswertungen vorzunehmen.

Durch die Verknüpfung der Maschinendaten mit den Positionsdaten der jeweiligen Maschine in der zentralen Datenbank sind auch Warn-, Alarm- und Fehlermeldungen mit der Positionsangabe absetzbar, so dass im Fehlerfall die betreffende Maschine schneller aufgesucht werden kann.

In einer Weiterentwicklung des erfindungsgemäßen Verfahrens kann auf dem mobilen Endgerät eine 3D-Visualisierung der Anlage oder von aktuell besuchten Anlagenteilen erfolgen, um die Navigation innerhalb der Anlage zu erleichtern. So könnte beispielsweise im Zusammenhang mit der laufenden Positionsbestimmung zielgerichtet der Weg zu einer havarierten Maschine gewiesen werden.

Weitere Ausgestaltungen der Anlagenvisualisierung mit integrierter Positionsbestimmung auf einem mobilen Endgerät sind selbstverständlich möglich und von der Erfindung mit umfasst.

## Patentansprüche

1. Verfahren zur Visualisierung von Zustandsdaten einer bestimmten Maschine in einer mehrere überwachte Maschinen umfassenden Anlage auf einem mobilen Endgerät, **gekennzeichnet durch** folgende Schritte:
- Ermitteln einer aktuellen Position des von einem Beobachter mitgeführten mobilen Endgeräts innerhalb der Anlage;
- Verknüpfen der aktuellen Position mit der bestimmten Maschine der Anlage, die die geringste Entfernung zur aktuellen Position hat, wobei die Positionen aller Maschinen der Anlage in einer zentralen Datenbank hinterlegt sind;
- Abrufen von Zustandsdaten der bestimmten Maschine von der zentralen Datenbank, in der auch die Zustandsdaten aller überwachten Maschinen der Anlage erfasst werden;
- Visualisierung der Zustandsdaten der bestimmten Maschine auf einer Anzeige des mobilen Endgerätes.

2. Verfahren nach Anspruch 1, wobei das Ermitteln der aktuellen Position des mobilen Endgeräts mindestens mittels Beschleunigungssensoren erfolgt, welche im mobilen Endgerät vorhanden sind, weiterhin folgende Schritte umfassend:
- Ermittlung einer Bezugskoordinate;
- laufende Ermittlung eines Vektors mindestens aus den Beschleunigungs- und Lagedaten der Beschleunigungssensoren;
- Ermittlung eines Bewegungsvektors aus den laufend ermittelten Vektoren;
- Berechnung der aktuellen Position aus dem Bewegungsvektor und der Bezugskoordinate.

3. Verfahren nach Anspruch 2, **dadurch gekennzeichnet, dass** die Ermittlung der Bezugskoordinate durch einmaliges Einloggen des mobilen Endgerätes an einem positionsbekannten Bezugspunkt der Anlage erfolgt.

4. Verfahren nach Anspruch 2, **dadurch gekennzeichnet, dass** die Ermittlung der Bezugskoordinate per GPS-Ortung erfolgt.

5. Verfahren nach einem der Ansprüche 2 bis 4, **dadurch gekennzeichnet, dass** weiterhin Daten infrastrukturabhängiger externer Sensoren erfasst und bei der Ermittlung der Bezugskoordinate und/oder der Positionsermittlung verwendet werden.

6. Verfahren nach Anspruch 5, **dadurch gekennzeichnet, dass** als externe Sensoren WLAN-Hotspots oder Infrarot-Sensoren der Infrastruktur der Anlage verwendet werden.

7. Verfahren nach einem der Ansprüche 1 bis 6, **dadurch gekennzeichnet, dass** das mobile Endgerät per drahtloser Kommunikation an die zentrale Datenbank angebunden ist.

8. Verfahren nach einem der Ansprüche 1 bis 7, **dadurch gekennzeichnet, dass** weiterhin eine direkte Befehlsabsetzung durch das mobile Endgerät an die zentrale Datenbank und/oder an die bestimmte Maschine erfolgt.

9. Verfahren nach einem der Ansprüche 1 bis 8, **dadurch gekennzeichnet, dass** eine 3D-Visualisierung der Anlage durchgeführt wird, um dem Beobachter mithilfe des mobilen Endgeräts eine geleitete Navigation zu einer bestimmten Maschine zu ermöglichen.

10. Vorrichtung zur Visualisierung von Zustandsdaten einer bestimmten Maschine in einer mehrere überwachte Maschinen umfassenden Anlage, wobei die Vorrichtung als ein mobiles Endgerät gestaltet ist, welches von einem Beobachter innerhalb der Anlage mitgeführt wird, wobei das mobile Endgerät mindestens umfasst:
- eine programmgesteuerte Datenverarbeitungseinheit;
- Beschleunigungssensoren, welche aus der Bewegung des Endgeräts resultierende Beschleunigungswerte an die Datenverarbeitungseinheit übergibt, die daraus eine aktuelle Position des Endgeräts innerhalb der Anlage ermittelt;
- eine Datenkommunikationsschnittstelle, welche die aktuelle Position an eine entfernte Zentraleinheit übermittelt und von dieser Zustandsdaten einer bestimmten Maschine der Anlage erhält, welche die geringste Entfernung zur aktuellen Position hat;
- eine Anzeige zur Visualisierung der Zustandsdaten der bestimmten Maschine.
